# EUROPÄISCHE PATENTSCHRIFT

(11) **EP 3 278 915 B1**
(45) Veröffentlichungstag und Bekanntmachung des Hinweises auf die Patenterteilung: **21.07.2021**
(21) Anmeldenummer: 17183828.7
(22) Anmeldetag: 28.07.2017
(51) Int. Cl.: B23D 45/12, B23D 47/02, E06C 9/02, F03D 13/20

(54) **EIN VERFAHREN ZUM TRENNEN EINER SCHALE ZUMINDEST EINER TURMSEKTION EINES TURMS UND EINE TRANSPORTABLE TRENNVORRICHTUNG**
A METHOD FOR SEPARATING A SHELL OF AT LEAST ONE TOWER SECTION OF A TOWER AND A TRANSPORTABLE SEPARATING DEVICE
PROCÉDÉ DE SÉPARATION D'UN PLATEAU D'AU MOINS UNE SECTION DE TOUR D'UNE TOUR ET DISPOSITIF DE SÉPARATION TRANSPORTABLE

(30) Priorität: 02.08.2016 DE 102016114297; 29.09.2016 DE 102016118549
(43) Veröffentlichungstag der Anmeldung: 07.02.2018
(73) Patentinhaber: eno energy systems GmbH, 18055 Rostock (DE)
(72) Erfinder: Porm, Karsten, 18236 Kröpelin (DE); Bockholt, Stefan, 18255 Kühlungsborn (DE); Ahrens, Robin, 18057 Rostock (DE); Bull, Michael, 18198 Kritzmow OT Groß Schwaß (DE)
(74) Vertreter: 2SPL Patentanwälte PartG mbB

(56) Entgegenhaltungen:
- WO-A1-2015/161858
- DE-A1-102013 107 059
- JP-A- H1 128 613
- US-A1- 2004 234 352
- US-A1- 2007 240 937

## Beschreibung

### Technisches Gebiet

Ausführungsbeispiele beziehen sich auf Konzepte zur Herstellung und Bauweise von Türmen und Teilen von Türmen und insbesondere auf ein Verfahren zum Trennen einer Schale zumindest einer Turmsektion eines Turms und eine transportable Trennvorrichtung.

### Hintergrund

In vielen Bereichen der Technik und des Bauwesens werden Bauteile, Maschinen, Anlagen und Systeme verwendet, deren Komponenten zum Teil mehrere zehn Meter lang sind und aus unterschiedlichen Gründen gegebenenfalls nicht weiter zerlegbar sind. Beispiele kommen aus vielen unterschiedlichen Bereichen und umfassen beispielsweise Turmbauteile, mechanisch besonders beanspruchte Träger, Prozessbehälter, Rotorblätter für Windenergieanlagen, Tragflächen für Luftfahrzeuge, Antriebswellen für Wasserfahrzeuge und andere entsprechende längliche Bauteile, um nur einige Beispiele zu nennen.

Gerade bei dem Transport dieser und ähnlicher Bauteile treten häufig Probleme auf, wenn die betreffenden Bauteile auf dem Landweg zu Binnenlandstandorten oder Verladeorten transportiert werden sollen. So können sich beispielsweise Höhenbegrenzungen während des Transports oder auch Probleme hinsichtlich von Kurvenradien aufgrund der Länge der betreffenden Bauteile ergeben. Beim Überlandtransport können so beispielsweise aufgrund von Brückendurchfahrten maximal durchfahrbare Höhen zu beachten sein. Aber auch aufgrund der Länge der betreffenden Bauteile von zum Teil mehreren zehn Metern kann bei einem Liegendtransport ein minimaler Kurvenradius häufig nicht unterschritten werden, was beispielsweise bei einem Transport auf der Straße zu Problemen führen kann.

Insbesondere für die Erzeugung von Energie aus Wind werden Turbinen mit hohen Türmen gebaut. Durch die mit der Höhe zunehmenden Windgeschwindigkeiten können mit größeren Nabenhöhen höhere Erträge erzielt werden. Dazu werden üblicherweise Windenergieanlagen mit Turmhöhen von oft über 100 m in Stahl-, Beton-, Holz- oder Hybridtürmen in Rohr- oder Gitterbauweise errichtet.

Aufgrund der vergleichsweise geringen Massen und Kosten werden Stahlrohrtürme bevorzugt. Aufgrund von Massen- und Größenbegrenzungen auf den Transportwegen können solche Türme jedoch nicht als Einzelteil transportiert werden. Daher werden meist mehrere Turmsektionen mit einer Länge von jeweils weniger als 30 m und einer Einzelmasse von meist weniger als 100 t gefertigt und auf der Baustelle miteinander verbunden. Solche Turmsektionen sind dabei meist auf einen für Brückendurchfahrten geeigneten Durchmesser von 4,0 - 4,5 m begrenzt.

Besonders für große Anlagen ist eine solche Durchmesserbegrenzung mit den auftretenden Lasten für einen Stabilitätsnachweis oft nicht in Einklang zu bringen. Daher ist es oft notwendig, den Durchmesser mindestens im unteren Bereich des Turmes so zu vergrößern, dass ein Transport als Rohrsektion nicht möglich ist. Solche Sektionen müssen dann entweder in Ihrer Länge begrenzt werden, so dass der Transport aufrecht erfolgen kann, oder zusätzlich längs getrennt werden.

Die Druckschrift JP H11 28613 A beschreibt eine Säge für Rohre, die zum Sägen auf dem Rohr befestigt werden kann. Ferner beschreibt die Druckschrift US 2004/0234362 A1 ein Schneidewerkzeug für Rohre.

DE 10 2013 107 059 A1 offenbart ein Verfahren zum Trennen einer Schale zumindest einer Turmsektion eines Turms einer Windenergieanlage.

### Zusammenfassung

Es besteht daher ein Bedarf daran, ein Konzept zur Herstellung und Bauweise von Türmen und Teilen von Türmen bereitzustellen, dass einen einfacheren Transport und/oder eine einfachere oder genauere Herstellung ermöglicht.

Diesem Bedarf tragen die Gegenstände der Ansprüche Rechnung.

Die Erfindung bezieht sich auf ein Verfahren zum Trennen einer Schale zumindest einer Turmsektion eines Turms einer Windenergieanlage gemäß des unabhängigen Anspruchs 1.

### Die Erfindung betrifft weiterhin transportable Trennvorrichtung gemäß den Ansprüchen 11 und 12.

### Figurenkurzbeschreibung

Ausführungsbeispiele werden nachfolgend bezugnehmend auf die beiliegenden Figuren näher erläutert. Es zeigen:
Fig. 1 zeigt ein Flussdiagramm eines Verfahrens zum Trennen einer Schale zumindest einer Turmsektion eines Turms;
Fig. 2 zeigt eine schematische Darstellung einer Turmsektion nach Verbinden einer Führungsstruktur mit der Schale;
Fig. 3 zeigt eine schematische Darstellung einer Turmsektion nach Aufsetzen einer transportablen Trennvorrichtung;
Fig. 4 zeigt eine schematische Darstellung einer Turmsektion während des Trennens der Schale;
Fig. 5 zeigt eine schematische Frontalansicht einer Turmsektion während des Trennens der Schale;
Fig. 6 zeigt eine schematische Seitenansicht einer weiteren Turmsektion während des Trennens der Schale;
Fig. 7 zeigt eine schematische Frontalansicht einer weiteren Turmsektion während des Trennens der Schale;
Fig. 8 zeigt eine schematische Aufsicht einer Turmsektion nach dem Trennen der Schale;
Fig. 9 zeigt eine schematische Darstellung einer Turmsektion nach dem Trennen der Schale;
Fig. 10a zeigt eine schematische Darstellung einer Turmsektion während des Trennens der Schale mit teilweise entfernten Leitersprossen;
Fig. 10b zeigt eine schematische Darstellung einer Turmsektion nach dem Trennen der Schale mit wieder befestigten Leitersprossen;
Fig. 10c zeigt eine schematische Darstellung einer Turmsektion nach dem Trennen der Schale mit teilweise entfernten Holmen der Leiter;
Fig. 11a zeigt eine schematische Darstellung einer weiteren Turmsektion während des Trennens der Schale mit teilweise entfernten Leitersprossen;
Fig. 11b zeigt eine schematische Darstellung einer weiteren Turmsektion nach dem Trennen der Schale mit wieder befestigten Leitersprossen;
Fig. 11c zeigt eine schematische Darstellung einer weiteren Turmsektion nach dem Trennen der Schale mit teilweise entfernten Holmen der Leiter;
Fig. 12a zeigt eine schematische Darstellung einer weiteren Turmsektion während des Trennens der Schale mit teilweise entfernten Leitersprossen;
Fig. 12b zeigt eine schematische Darstellung einer weiteren Turmsektion nach dem Trennen der Schale mit wieder befestigten Leitersprossen;
Fig. 12c zeigt eine schematische Darstellung einer weiteren Turmsektion nach dem Trennen der Schale mit teilweise entfernten Holmen der Leiter;
Fig. 13a zeigt eine schematische Darstellung einer weiteren Turmsektion während des Trennens der Schale mit teilweise entfernten Leitersprossen;
Fig. 13b zeigt eine schematische Darstellung einer weiteren Turmsektion nach dem Trennen der Schale mit wieder befestigten Leitersprossen;
Fig. 13c zeigt eine schematische Darstellung einer weiteren Turmsektion nach dem Trennen der Schale mit teilweise entfernten Holmen der Leiter;
Fig. 14a zeigt eine schematische Vorderansicht einer transportablen Trennvorrichtung;
Fig. 14b zeigt eine schematische Aufsicht der transportablen Trennvorrichtung aus Fig. 14a;
Fig. 15a zeigt eine schematische Darstellung einer Führungseinrichtung einer transportablen Trennvorrichtung;
Fig. 15b zeigt eine schematische Darstellung einer Führungseinrichtung einer weiteren transportablen Trennvorrichtung;
Fig. 16 zeigt eine schematische Darstellung einer transportablen Trennvorrichtung mit Auslegern;
Fig. 17 zeigt eine schematische Darstellung einer Verbindungsstelle zweier Teilstücke einer Turmsektion;
Fig. 18 zeigt eine schematische Ansicht eines Endes einer Turmsektion nach Befestigen von zwei benachbarten Längsflanschen und vor Trennen der Schale;
Fig. 19 zeigt eine schematische Ansicht eines Teilstücks einer Turmsektion; und
Fig. 20 zeigt einen schematischen Querschnitt einer Windenergieanlage.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung, welche durch die nachfolgenden Ansprüche definiert ist, liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

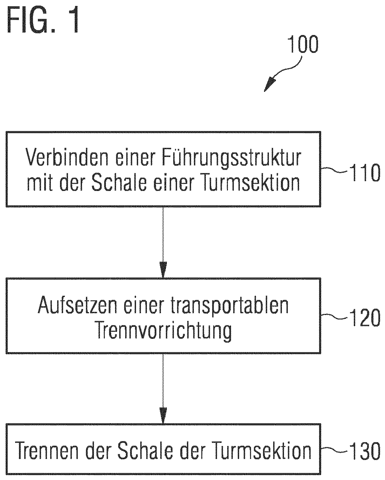

Fig. 1 zeigt ein Flussdiagramm eines Verfahrens 100 zum Trennen einer Schale zumindest einer Turmsektion eines Turms entsprechend einem Ausführungsbeispiel. Das Verfahren 100 umfasst ein Verbinden 110 einer Führungsstruktur mit der Schale einer Turmsektion eines Turms und ein Aufsetzen 120 einer transportablen Trennvorrichtung auf die Schale der Turmsektion, sodass eine Führungseinrichtung der transportablen Trennvorrichtung mit der Führungsstruktur gekoppelt wird, sodass sich ein Trenngerät der transportablen Trennvorrichtung während einer Bewegung entlang der Führungsstruktur entlang einer gewünschten Trennlinie bewegt. Ferner umfasst das Verfahren 100 ein Trennen 130 der Schale der Turmsektion entlang der gewünschten Trennlinie während sich die Führungseinrichtung der transportablen Trennvorrichtung entlang der Führungsstruktur bewegt.

Durch das Fahren entlang einer mit der Turmsektion verbunden Führungsstruktur kann eine Trennung der Schale der Turmsektion entlang einer gewünschten Trennlinie mit hoher Genauigkeit erfolgen. Durch die Verwendung einer transportablen Trennvorrichtung kann das Trennen der Schale und damit die Herstellung des Turms vereinfacht werden und die Trennvorrichtung an verschiedenen Orten eingesetzt werden. Durch das Trennen der Turmsektion in Teilstücke kann der Transport der Einzelteile des Turms zum Aufstellort vereinfacht oder erst ermöglicht werden.

Die Führungsstruktur kann beispielsweise ein oder mehrere Elemente aufweisen, von denen alle, manche oder keines permanent an der Schale der Turmsektion befestigt ist (z.B. durch Anschweißen). In anderen Worten, die Führungsstruktur kann insgesamt permanent mit der Schale der Turmsektion verbunden werden oder ein oder mehrere Elemente der Führungsstruktur könnten permanent mit der Schale der Turmsektion verbunden werden, während ein oder mehrere andere Elemente wieder lösbar (z.B. über eine Schraubenverbindung) direkt oder indirekt mit der Schale der Turmsektion verbunden werden, oder die Führungsstruktur kann insgesamt wieder lösbar mit der Schale der Turmsektion verbunden werden. Die Führungsstruktur oder permanent befestigte Elemente der Führungsstruktur können auch nach Aufstellen des Turms als Teil des Turms dauerhaft am Turm verbleiben.

Beispielsweise kann die Führungsstruktur zumindest ein permanent befestigtes Element aufweist und das Verbinden 110 der Führungsstruktur mit der Schale kann dann ein permanentes Verbinden des permanent befestigten Elements mit der Schale umfassen. Das permanent befestigte Element kann beispielsweise an der Schale der Turmsektion durch Anschweißen permanent befestigt werden.

Beispielsweise kann das permanent befestigte Element eine Führungsschiene (z.B. Führungsschiene einer Linearführung) und/oder ein Holm einer Leiter sein.

Alternativ kann das permanent befestigte Element eine Schweißbuchse einer Mehrzahl von Schweißbuchsen sein, die an der Schale der Turmsektion permanent befestigt werden. Die Führungsstruktur umfasst zumindest einen Holm einer Leiter und der Holm der Leiter kann an der Mehrzahl von Schweißbuchsen befestigt werden. Beispielsweise können die Schweißbuchsen ein Innengewinde aufweisen und der Holm der Leiter kann beispielweise über Schrauben mit den Schweißbuchsen und somit mit der Schale der Turmsektion verbunden werden.

Beispielsweise kann nach dem Trennen der Schale der Turmsektion entlang der gewünschten Trennlinie ein Befestigen einer Mehrzahl von Leitersprossen an dem Holm der Leiter erfolgen. Wird eine Leiter als Führungsstruktur verwendet, so kann die Leiter auch nach Aufstellen des Turms als Wartungsleiter benutzt werden, um z.B. die Trennfuge zwischen den Schalensegmenten der Teilstücke der Turmsektion in regelmäßigen Abständen auf Beschädigungen zu überprüfen.

Die Führungseinrichtung der transportablen Trennvorrichtung wird beim Aufsetzen 120 mit dem Holm der Leiter gekoppelt. Beispielsweise kann die Führungsschiene eine Führungsschiene einer Linearführung sein und die Führungseinrichtung der transportablen Trennvorrichtung kann beispielsweise einen Schlitten der Linearführung aufweisen. Alternativ kann der Holm der Leiter die Form einer Führungsschiene einer Linearführung aufweisen.

Der Holm einer Leiter kann sich beispielsweise im Wesentlichen parallel zu einer Symmetrieachse der Turmsektion oder im Wesentlichen entlang einer Geraden, die die Symmetrieachse der Turmsektion kreuzt, erstrecken und/oder sich im Wesentlichen parallel zu der gewünschten Trennlinie erstrecken. Die gewünschte Trennlinie kann beispielsweise zwischen zwei Holmen der Leiter liegen.

Mehrere aneinander anschließende Holme von Leiterteilen können mit der Schale der Turmsektion verbunden sein, sodass sich die Holme im Wesentlichen entlang der gesamten Länge der Turmsektion erstrecken, um eine durchgehende Führung während des Trennens 130 zu bieten. Alternativ kann ein einteiliger Holm einer Leiter im Wesentlichen gleich lang wie die Turmsektion sein.

Zum Trennen kann die Turmsektion beispielweise auf eine Schalenseite gelegt werden, sodass die gewünschte Trennlinie im Wesentlichen an einer 12-Uhr-Position zu liegen kommt. Die transportablen Trennvorrichtung kann dann beispielsweise in einer 12-Uhr-Position auf die Schale der Turmsektion aufgesetzt 120 werden, sodass die Führungseinrichtung der transportablen Trennvorrichtung und die mit der Schale einer Turmsektion verbundene Führungsstruktur gekoppelt werden. Auch leichte Abweichungen von der 12-Uhr-Position können möglich sein, da die transportable Trennvorrichtung sich an der Führungsstruktur abstützen oder anhängen könnte.

Das Trennen 130 der Schale der Turmsektion oder eines Turms könnte beispielsweise durch Sägen oder Fräsen erfolgen. Beispielsweise ist die Trennvorrichtung eine Säge oder eine Fräse. Die transportable Trennvorrichtung kann also beispielsweise eine transportable Sägevorrichtung oder eine transportable Fräsvorrichtung sein.

Durch ein Trennen der Schale an zumindest zwei Stellen kann die Turmsektion in zumindest zwei Teilstücke zerteilt werden. Nach dem Trennen 130 entlang einer ersten gewünschten Trennlinie kann die Turmsektion gedreht werden, um die Schale der Turmsektion entlang zumindest einer weiteren (zweiten) gewünschten Trennlinie zu Trennen.

Beispielsweise kann die Turmsektion auf Rollen gelagert sein und nach dem Trennen 130 entlang der ersten gewünschten Trennlinie auf den Rollen rotiert werden, sodass beispielsweise die weitere (zweite) gewünschte Trennlinie wiederum im Wesentlichen in 12-Uhr-Position zu liegen kommt. Dazu können beispielsweise die Führungsschiene oder der Holm einer Leiter wieder ganz oder teilweise entfernt werden, damit diese den Rollen beim Rotieren der Turmsektion nicht im Weg sind. Das Verfahren 100 kann also optional zusätzlich ein Entfernen des Holms der Leiter oder der Führungsschiene nach dem Trennen der Schale der Turmsektion entlang der (ersten) gewünschten Trennlinie und ein Rotieren der Turmsektion auf Rollen umfassen. Die Rollen können sich während des Rotierens der Turmsektion zwischen den Schweißbuchsen, an denen der Holm der Leiter oder die Führungsschiene während des Trennens befestigt war, hindurchbewegen. Ferner kann das Verfahren 100 optional ein Verbinden einer weiteren (zweiten) Führungsstruktur mit der Schale der Turmsektion des Turms und ein Aufsetzen der transportablen Trennvorrichtung auf der Schale der Turmsektion umfassen, sodass die Führungseinrichtung der transportablen Trennvorrichtung mit der weiteren Führungsstruktur gekoppelt wird, sodass sich das Trenngerät während einer Bewegung entlang der weiteren Führungsstruktur entlang einer weiteren (zweiten) gewünschten Trennlinie bewegt. Zusätzlich kann das Verfahren 100 dann ein Trennen der Schale der Turmsektion entlang der weiteren gewünschten Trennlinie, während sich die Führungseinrichtung der transportablen Trennvorrichtung entlang der weiteren Führungsstruktur bewegt, umfassen.

Eine Turmsektion ist z.B. ein Teil eines Turms, der beispielsweise eine Symmetrie bezüglicher einer im Wesentlichen vertikalen Turmachse aufweist. Beispielsweise kann die Turmsektion (die Schale der Turmsektion) im Wesentlichen eine zylindermantelförmige oder kegelstumpfmantelförmige Geometrie aufweisen. Die Turmsektion kann optional eine Türöffnung aufweisen.

Ein Teilstück der Turmsektion wird beispielsweise bei der Trennung der Schale der Turmsektion in kleinere Teile erzeugt. Dementsprechend umfasst das Teilstück ein Segment der Schale der Turmsektion. Das Schalensegment umfasst beispielsweise zwei sich im Wesentlichen horizontal (oder orthogonal zu einer Turmachse oder Symmetrieachse der Turmsektion) erstreckende Querseiten und zwei sich im Wesentlich orthogonal zu den Querseiten (z.B. im Wesentlichen vertikal oder in Richtung der Turmachse) erstreckende Längsseiten. Die Längsseiten können z.B. für hohlzylinderförmige Turmsektionen im Wesentlichen parallel zu der Turmachse sein oder von der parallelen Richtung für hohlkegelstumpfförmige Turmsektionen leicht abweichen (z.B. weniger als 3° oder weniger als 1°). Das Schalensegment kann z.B. eine Form aufweisen, die im Wesentlichen einen Teil einer zylindermantelförmigen oder kegelstumpfmantelförmigen Geometrie bildet. Das Schalensegment ist beispielsweise Teil der Außenschale des Turms und kann z.B. aus Stahl gefertigt sein. Die Querseite des Schalensegments kann beispielsweise eine Länge von mehr als 4 m (oder mehr als 6 m oder mehr als 8 m) aufweisen. Die Längsseite des Schalensegments kann z.B. eine Länge von mehr als 5 m (oder mehr als 10 m oder mehr als 20 m) aufweisen. Das Schalensegment kann beispielsweise eine Dicke von mehr als 25 mm (oder mehr als 35 mm oder mehr als 50 mm) aufweisen.

Als Turm wird z.B. ein vertikal ausgerichtetes Bauwerk bezeichnet, beispielsweise für eine Windenergieanlage. Die Definition eines Turms enthält sowohl abgespannte als auch freistehende Konstruktionen und berücksichtigt somit auch Konstruktionen, die manchmal auch als Mast bezeichnet werden. Beispielsweise kann der Turm ein Turm einer Windenergieanlage sein.

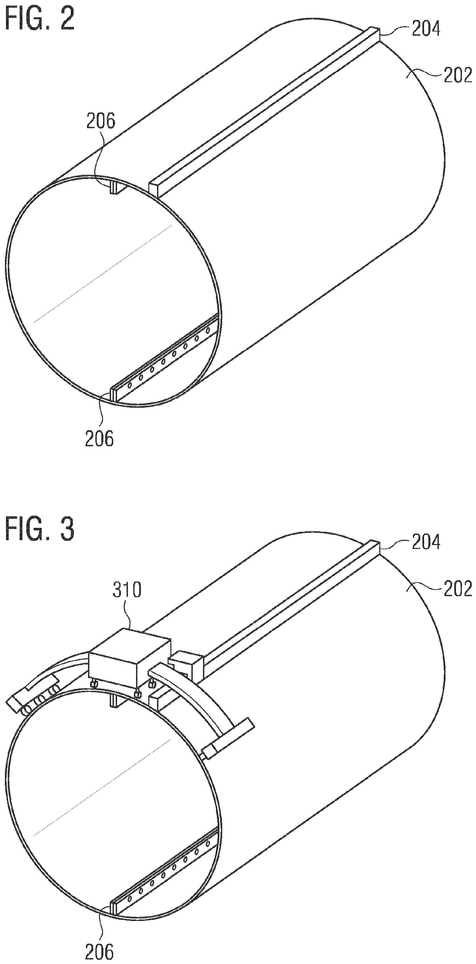

Fig. 2 zeigt eine schematische Darstellung einer Turmsektion nach Verbinden einer Führungsstruktur 204 mit der Schale 202. Ferner sind an der Innenseite der Schale 202 im Bereich von zwei gewünschten Trennlinien Längsflansche 206 an der Schale 202 befestigt, über welche die Teilstücke der Turmsektion nach dem Trennen und Transport an dem Aufstellort wieder miteinander verbunden werden können.

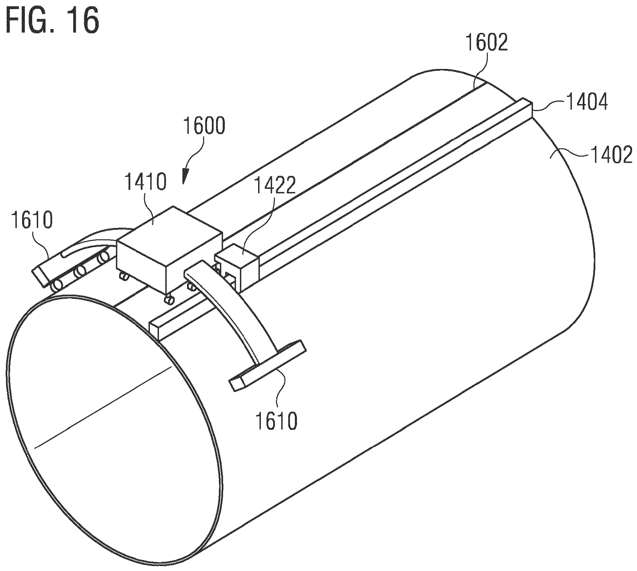

Fig. 3 zeigt eine schematische Darstellung einer Turmsektion nach Aufsetzen einer transportablen Trennvorrichtung 310. Als Beispiel ist eine transportable Trennvorrichtung 310 gezeigt, wie sie auch in Zusammenhang mit Fig. 16 beschrieben ist. Die transportable Trennvorrichtung 310 kann aber auch auf einem anderen der beschriebenen Beispiele basieren.

Beispielsweise könnte eine Säge in 12-Uhr-Position auf eine Turmwand (Schale einer Turmsektion) gesetzt werden. Die Säge/Sägeblatt könnte fix auf einem Rahmen (Fahrwerk) verbaut sein, welcher sich über Rollen und/oder Räder auf der Turmwand abstützt. Der Antrieb und/oder Vorschub dieses Vehikels könnte über eine Linearführung realisiert sein. Die Säge könnte ohne Unterbrechung und/oder Umsetzen auf ihren Rollen und/oder Rädern laufen, beispielsweise über den kompletten Turm. Der Anpressdruck der Säge könnte mittels Gewichten (z.B. an den Auslegern) realisiert werden (z.B. ohne Elektromagnete zu benötigen).

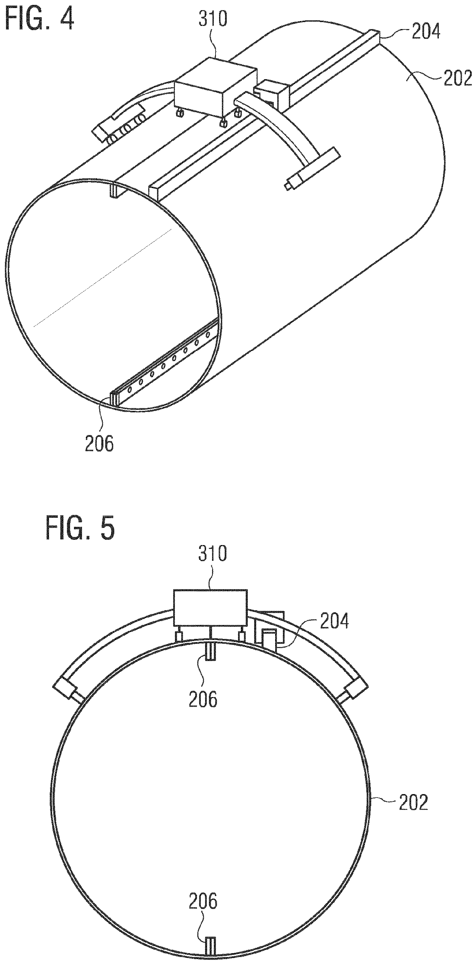

Fig. 4 zeigt eine schematische Darstellung einer Turmsektion während des Trennens der Schale 202. Die Schale 202 wird dabei von einem Ende der Turmsektion bis zu einem gegenüberliegenden Ende der Turmsektion vollständig durchtrennt.

Fig. 5 zeigt eine schematische Frontalansicht einer Turmsektion während des Trennens der Schale 202. Das Sägeblatt schneidet im Bereich der Längsflansche 206 durch die Schale 202 der Turmsektion.

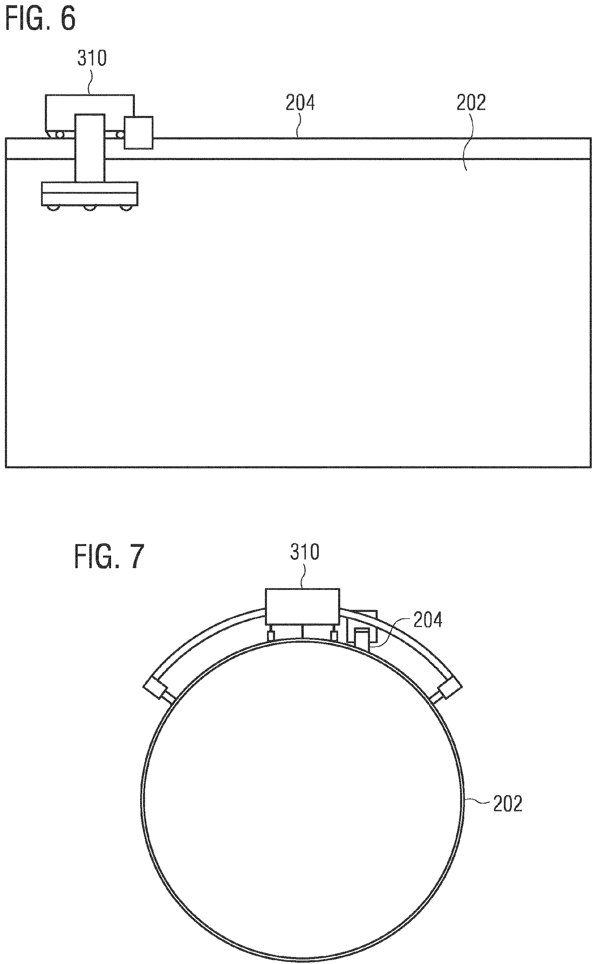

Fig. 6 zeigt eine schematische Seitenansicht einer Turmsektion während des Trennens der Schale 202 und Fig. 7 zeigt eine schematische Frontalansicht einer Turmsektion während des Trennens der Schale 202.

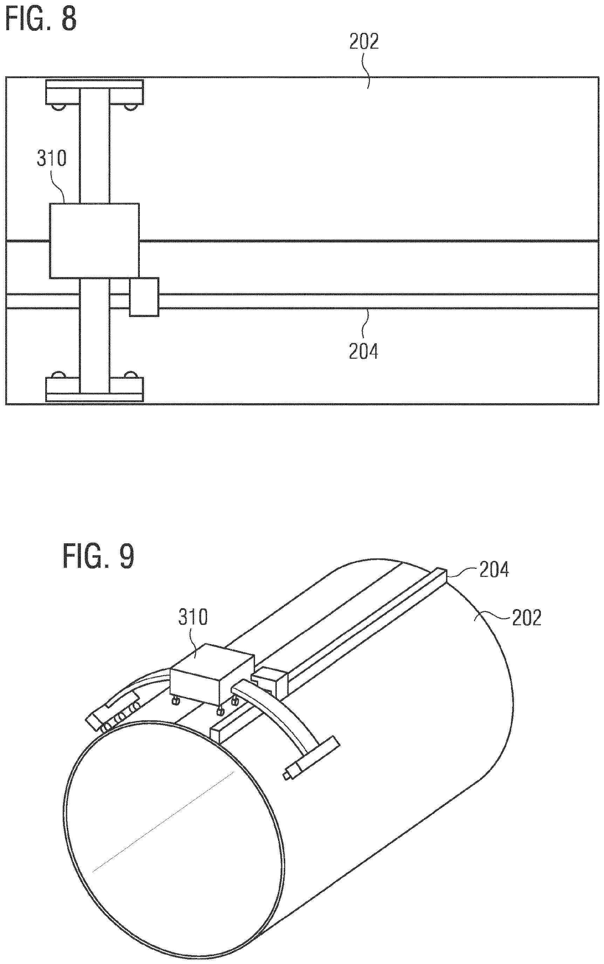

Fig. 8 zeigt eine schematische Aufsicht einer Turmsektion nach dem Trennen der Schale 202 und Fig. 9 zeigt eine schematische Schrägansicht einer Turmsektion nach dem Trennen der Schale 202. Die transportable Trennvorrichtung 310 kann nach dem Trennen von der Turmsektion wieder entfernt werden.

Optional könnte eine beidseitig (oder einseitig) der Trennfuge an der Außenwand des Turmes als integraler Teil des Turmes installierte Wartungsleiter zur Begutachtung der Trennfuge und/oder Abdichtung selbiger als Führung für die Säge verwendet werden.

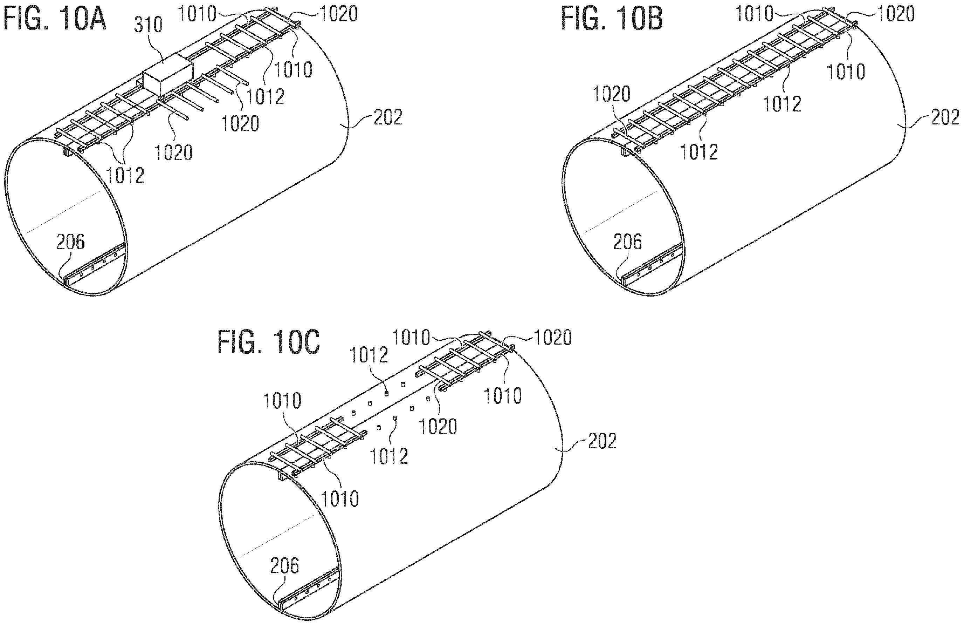

Fig. 10a zeigt eine schematische Darstellung einer Turmsektion während des Trennens der Schale 202 mit teilweise entfernten Leitersprossen 1020. Zwei mehrteilige Holme 1010 einer Leiter sind über eine Mehrzahl von Schweißbuchsen 1012 mit der Schale 202 der Turmsektion verbunden. In einem Bereich der gerade gesägt wird, können die Leitersprossen 1020 entfernt werden, um den Weg der Säge nicht zu blockieren. Alternativ können die Leitersprossen 1020 auch generell erst nach dem Sägen an den Leiterholmen 1010 befestigt werden. In diesem Beispiel ist eine transportable Säge 310 gezeigt, die auf Rollen oder Rädern auf der Schale der Turmsektion entlangfährt und über eine Führungseinrichtung mit einem Holm 1010 der Leiter gekoppelt ist, um die gewünschte Bewegungsrichtung zu halten.

Fig. 10b zeigt passend zu Fig. 10a eine schematische Darstellung der Turmsektion nach dem Trennen der Schale 202 mit wieder befestigten Leitersprossen 1020.

Alternativ kann zuerst die Turmsektion noch für einen weiteren Trennschnitt gedreht werden, wie es beispielsweise passend zu Fig. 10a in Fig. 10c gezeigt ist. Fig. 10c zeigt eine schematische Darstellung der Turmsektion nach dem Trennen der Schale 202 mit teilweise entfernten Holmen 1010 der Leiter. Dadurch kann die Turmsektion auf Rollen gedreht werden, ohne dass die Holme 1010 der Bewegung der Rollen im Weg wären. In anderen Worten, es können Leitersegmente für den Drehvorgang demontiert werden.

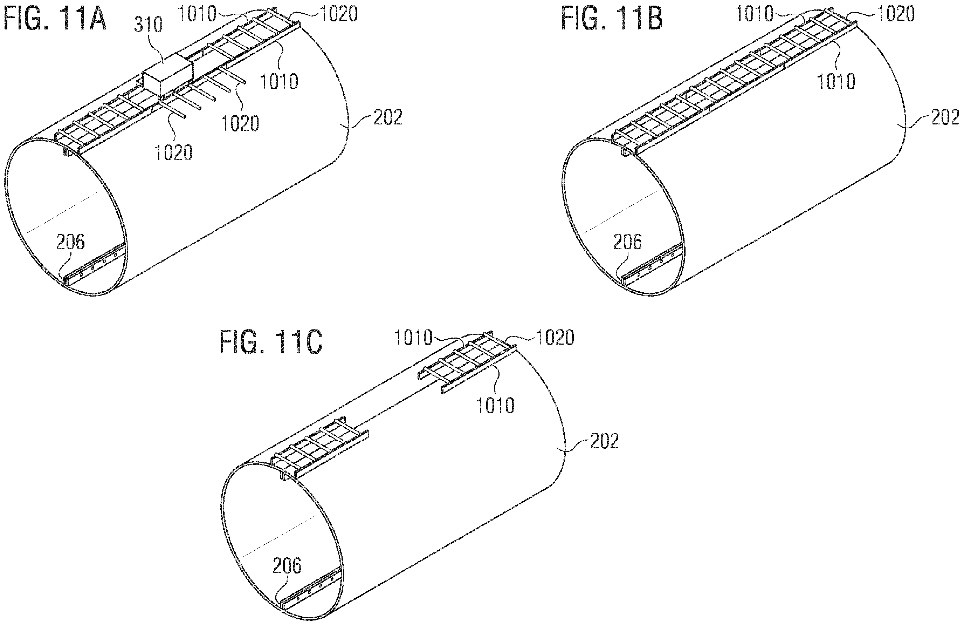

Die Fig. 11a bis 11c zeigen im Vergleich zu den Fig. 10a bis 10c eine Variante ohne Schweißbuchsen. Die beiden mehrteiligen Holme 1010 der Leiter werden permanent (z.B. durch Anschweißen) oder lösbar (z.B. durch Anschrauben) an der Schale 202 der Turmsektion befestigt. Weitere Ausführungen sind in Zusammenhang mit den Fig. 10a bis 10c gemacht.

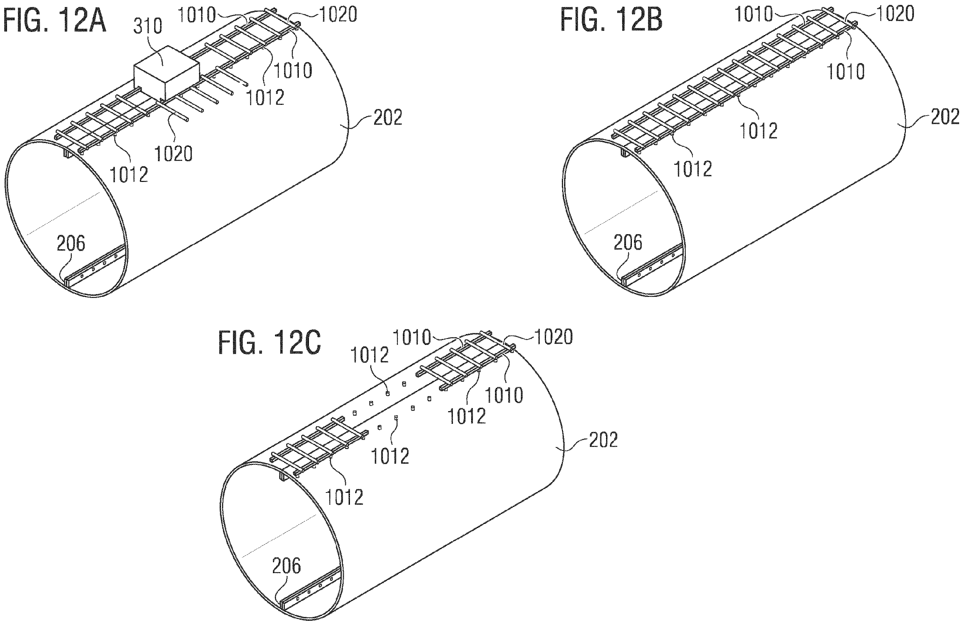

Die Fig. 12a bis 12c zeigen im Vergleich zu den Fig. 10a bis 10c eine Variante mit einer transportablen Trennvorrichtung, die auf die Holme 1010 der Leiter aufgesetzt wird und während dem Trennen an den Holmen 1010 entlangrollt und geführt wird. Weitere Ausführungen sind in Zusammenhang mit den Fig. 10a bis 10c gemacht.

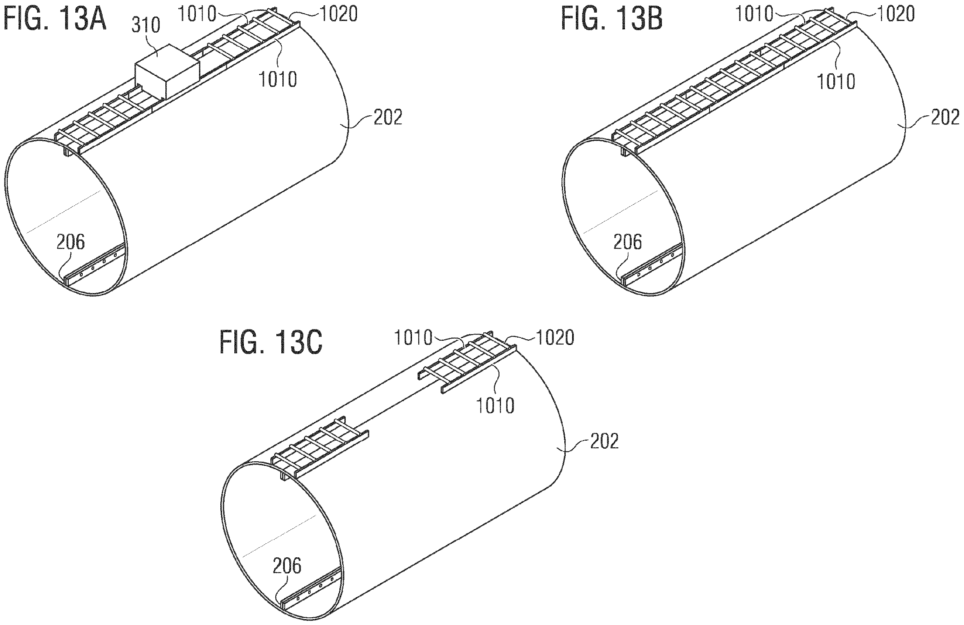

Die Fig. 13a bis 13c zeigen im Vergleich zu den Fig. 11a bis 11c eine Variante mit einer transportablen Trennvorrichtung 310, die auf die Holme 1010 der Leiter aufgesetzt wird und während des Trennens an den Holmen 1010 entlangrollt und geführt wird. Weitere Ausführungen sind in Zusammenhang mit den Fig. 11a bis 11c gemacht.

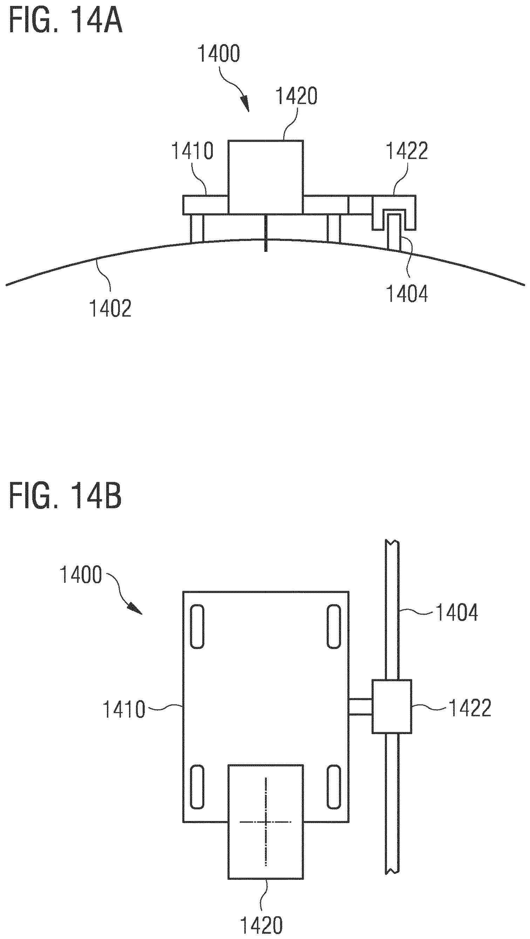

Fig. 14a und 14b zeigen eine schematische Vorderansicht und Aufsicht einer transportablen Trennvorrichtung 1400 gemäß einem Ausführungsbeispiel. Die transportable Trennvorrichtung 1400 umfasst ein Fahrwerk 1410, das ausgelegt ist, um auf einer Turmsektion eines Turms oder auf einer mit einer Schale 1402 der Turmsektion verbundenen Führungsstruktur 1404 entlang zu fahren. Ferner umfasst die transportable Trennvorrichtung 1400 ein an dem Fahrwerk 1410 befestigtes Trenngerät 1420, das ausgelegt ist, um die Schale 1402 der Turmsektion entlang einer gewünschten Trennlinie zu trennen. Das Fahrwerk 1410 weist eine Führungseinrichtung 1422 auf, die ausgelegt ist, um beim Aufsetzen der transportablen Trennvorrichtung 1400 auf die Turmsektion mit der Führungsstruktur 1404 gekoppelt zu werden, sodass sich das Trenngerät 1420 während einer Bewegung entlang der Führungsstruktur 1404 entlang der gewünschten Trennlinie bewegt.

Durch die Verwendung einer transportablen Trennvorrichtung kann das Trennen der Schale und damit die Herstellung des Turms vereinfacht werden und die Trennvorrichtung an verschiedenen Orten eingesetzt werden.

Die transportable Trennvorrichtung 1400 ist beispielsweise ausgebildet, sodass sich die gesamte transportable Trennvorrichtung während des Trennens der Schale der Turmsektion entlang der gewünschten Trennlinie relativ zur Schale der Turmsektion bewegt. Beispielsweise sind das Fahrwerk 1410, die Trennvorrichtung 1420 und die Führungseinrichtung 1422 fest miteinander verbunden und bewegen sich während des Trennens mit gleicher Geschwindigkeit in die gleiche Richtung.

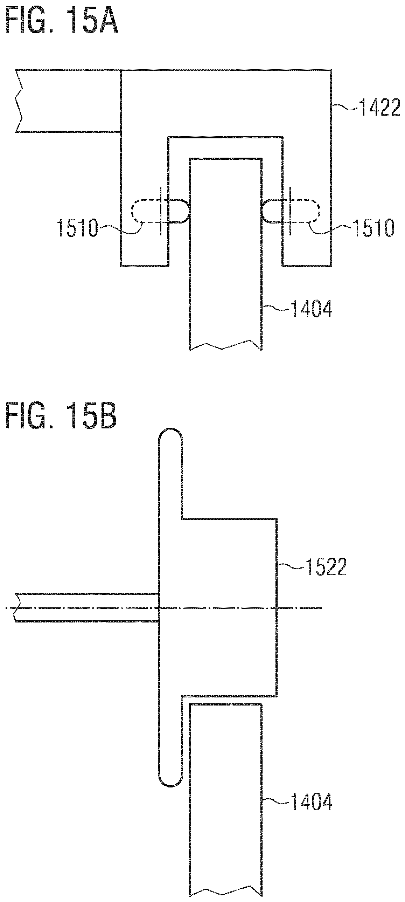

Die Führungseinrichtung 1422 der transportablen Trennvorrichtung kann auf verschiedene Arten implementiert werden. Beispielsweise kann die Führungseinrichtung 1422 die Führungsstruktur 1404 U-förmig umgeben und ein oder mehrere Rollen 1510 aufweisen, die seitlich an der Führungsstruktur 1404 anliegen, wie es beispielsweise in Fig. 15a gezeigt ist. Alternativ kann das Fahrwerk 1410 beispielsweise als Führungseinrichtung zumindest ein Führungsrad 1522 aufweisen, wie es z.B. in Fig. 15b gezeigt ist. Das Führungsrad 1522 kann dabei eine Lauffläche zum Rollen auf der Führungsstruktur 1404 und zumindest eine Radscheibe (oder zwei Radscheiben an gegenüberliegenden Seiten der Führungsstruktur) umfassen, die eine seitliche Führung entlang der Führungsstruktur 1404 gewährleisten kann. Das Führungsrad 1522 kann dann im Bereich der Radscheibe einen größeren Durchmesser als im Bereich der Lauffläche aufweisen. Alternativ könnte die Führungseinrichtung 1422 ein Schlitten einer Linearführung und die Führungsstruktur 1404 eine Führungsschiene der Linearführung sein.

Beispielsweise kann die transportable Trennvorrichtung 1400 ausgelegt sein, um ausschließlich auf ein oder mehreren Führungsstrukturen aufgesetzt zu werden ohne mit der Schale der Turmsektion in Kontakt zu sein. Die transportable Trennvorrichtung 1400 rollt dann z.B. auf den Führungsstrukturen und wird dadurch auch automatisch so geführt, dass die Trennvorrichtung die Schale entlang der gewünschten Trennlinie trennt. Alternativ kann die transportable Trennvorrichtung 1400 auf die Schale der Turmsektion aufgesetzt werden, sodass die transportable Trennvorrichtung 1400 während der Bewegung beim Trennen mit der Schale der Turmsektion in Kontakt ist. Das Fahrwerk weist zumindest ein Rad (z.B. vier oder mehr Räder) auf, das ausgelegt ist, um während des Trennens der Schale der Turmsektion auf der Schale der Turmsektion zu rollen.

Weitere Details und optionale Aspekte des in Fig. 14a und 14b gezeigten Beispiels sind in Verbindung mit dem vorgeschlagenen Konzept oder einem oder mehreren der zuvor oder im Folgenden beschriebenen Ausführungsbeispiele (z. B. Fig. 1 bis 13c und 15a-20) beschrieben.

Fig. 16 zeigt eine schematische Darstellung einer transportablen Trennvorrichtung 1600 gemäß einem Ausführungsbeispiel. Die Implementierung der transportablen Trennvorrichtung 1600 kann ähnlich der in Fig. 14a/14b gezeigten Implementierung einer transportablen Trennvorrichtung sein. Zusätzlich kann das Fahrwerk zumindest einen Ausleger 1610 mit zumindest einem Stützrad aufweisen. Das Stützrad des Auslegers 1610 kann beispielsweise ausgelegt und angeordnet sein, um auf einer der gewünschten Trennlinie 1602 gegenüberliegenden Seite der Führungsstruktur 1404 während des Trennens der Schale 1402 der Turmsektion auf der Schale 1402 der Turmsektion zu rollen.

Die in Fig. 16 gezeigte transportable Trennvorrichtung 1600 weist an beiden Seiten einen Ausleger 1610 mit jeweils drei Stützrädern auf. Dadurch kann die transportable Trennvorrichtung 1600 sehr stabil auf die Schale 1402 aufgesetzt werden und kann eine stabile Lage auch während des Trennvorgangs besser halten.

Weitere Details und optionale Aspekte des in Fig. 16 gezeigten Beispiels sind in Verbindung mit dem vorgeschlagenen Konzept oder einem oder mehreren der zuvor oder im Folgenden beschriebenen Ausführungsbeispiele (z. B. Fig. 1 bis 15b und 17-20) beschrieben.

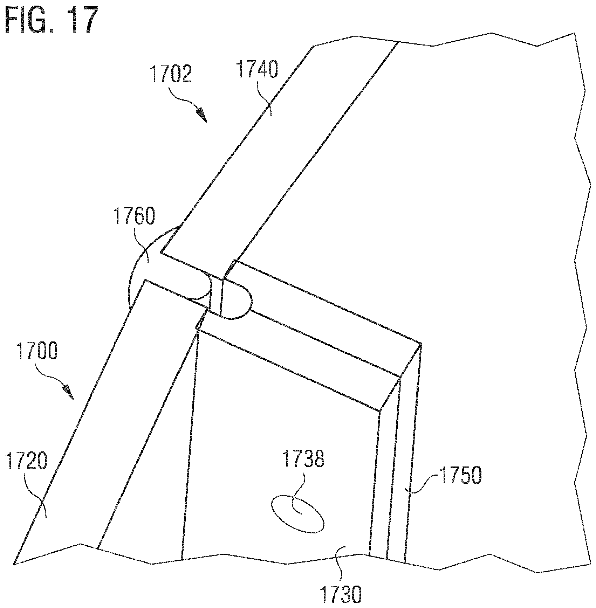

Fig. 17 zeigt eine schematische Darstellung einer Verbindungsstelle zweier Teilstücke 1700, 1702 einer Turmsektion, wie sie durch ein beschriebenes Verfahren zum Trennen einer Schale zumindest einer Turmsektion eines Turms und/oder mit Hilfe einer beschriebenen transportable Trennvorrichtung hergestellt werden können. Die Teilstücke 1700, 1702 weisen jeweils ein Schalensegment 1720, 1740 und zumindest einen Längsflansch 1730, 1750 auf. Die Längsflansche 1730, 1750 weisen Löcher 1738 zum Verbinden der Längsflansche (z.B. durch Schrauben) auf. Ferner ist zwischen den Enden der Längsflansche 1730, 1750, die den Schalensegmenten 1720, 1740 zugewandt sind, ein Spalt vorhanden. Ebenso ist zwischen den beiden Schalensegmenten 1720, 1740 ein Spalt angeordnet. Zusätzlich ist in dem Spalt zwischen den Schalensegmenten 1720, 1740 zur Abdichtung des Spalts ein im Wesentlichen T-förmiges Dichtelement 1760 angeordnet.

Beispielsweise zeigt Fig. 17 eine Situation nach dem Zusammenbau des Turms (Schrauben nicht dargestellt).

Weitere Details und optionale Aspekte des in Fig. 17 gezeigten Beispiels sind in Verbindung mit dem vorgeschlagenen Konzept oder einem oder mehreren der zuvor oder im Folgenden beschriebenen Ausführungsbeispiele (z. B. Fig. 1 bis 16 und 18-20) beschrieben.

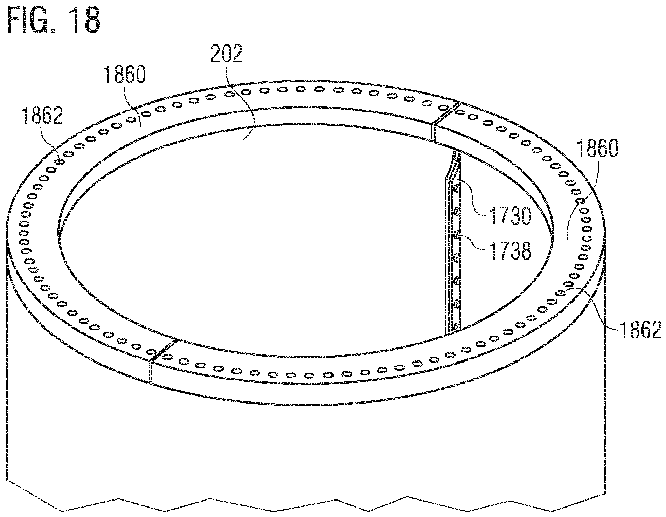

Fig. 18 zeigt eine schematische Ansicht eines Endes einer Turmsektion nach dem Befestigen von zwei benachbarten Längsflanschen 1730 und vor dem Trennen der Schale 202. Die Längsflansche 1730 sind beispielsweise mit Schrauben 1738 miteinander verbunden und können so nach dem Trennen der Schale 202 wieder von einander gelöst werden. Am oberen und/oder unteren Ende der Schale 202 der Turmsektion können Querflansche 1860 zum Verbinden mit anderen Turmsektionen oder einem Fundament angeordnet sein. Die Querflansche 1860 können über den Umfang der Turmsektion in mehrere Teile geteilt sein. Beispielsweise sind die Querflansche 1860 an denselben Stellen unterteilt, an denen die Schale 202 entlang der Längsflansche 1730 getrennt wird. Die Querflansche können Löcher 1862 zum späteren Verbinden mit anderen Turmsektionen oder einem Fundament durch Schrauben aufweisen.

Weitere Details und optionale Aspekte des in Fig. 18 gezeigten Beispiels sind in Verbindung mit dem vorgeschlagenen Konzept oder einem oder mehreren der zuvor oder im Folgenden beschriebenen Ausführungsbeispiele (z. B. Fig. 1 bis 17 und 19-20) beschrieben.

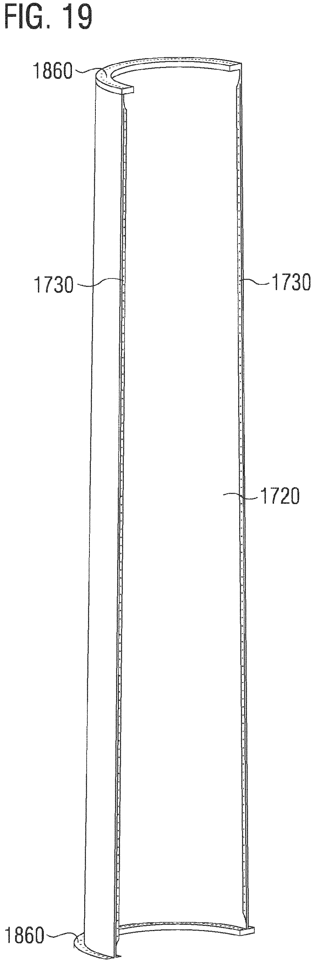

Fig. 19 zeigt eine schematische Ansicht eines Teilstücks einer Turmsektion. Beispielsweise zeigt Fig. 19 einen Bereich der geteilten Turmschale 1720 mit fertig angeschweißten Längsflanschen 1730 und Querflanschen 1860.

Weitere Details und optionale Aspekte des in Fig. 19 gezeigten Beispiels sind in Verbindung mit dem vorgeschlagenen Konzept oder einem oder mehreren der zuvor oder im Folgenden beschriebenen Ausführungsbeispiele (z. B. Fig. 1 bis 18 und 20) beschrieben.

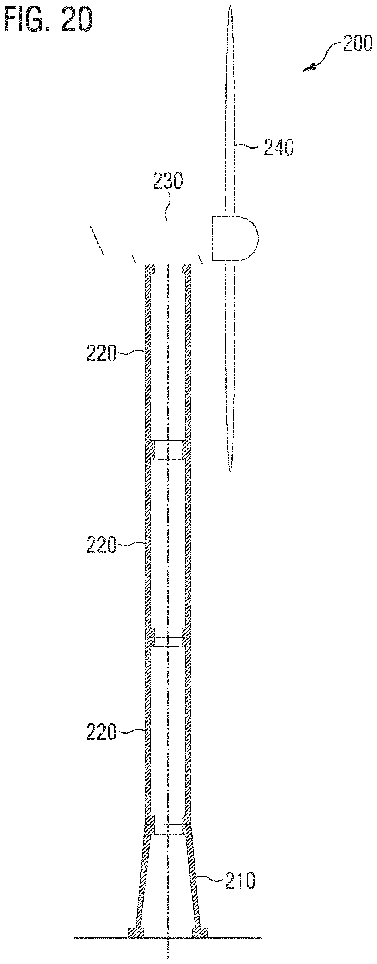

Fig. 20 zeigt einen schematischen Querschnitt einer Windenergieanlage 200 entsprechend einem Ausführungsbeispiel. Die Windenergieanlage 200 umfasst einen Turm und ein Maschinenhaus 230 mit angeschlossenem Rotor 240. Der Turm umfasst eine hohlkegelstumpfförmige untere Turmsektion 210 und drei hohlzylindrische obere Turmsektion 220. Zumindest die untere Turmsektion 210 umfasst zwei Teilstücke, wie sie mit dem beschriebenen Konzept oder in Zusammenhang mit einem oder mehreren der vorhergehend oder nachfolgend beschriebenen Ausführungsbeispiele hergestellt werden könnte. Beispielsweise können die Teilstücke und/oder Turmsektionen durch ein beschriebenes Verfahren zum Trennen einer Schale zumindest einer Turmsektion eines Turms und/oder mit Hilfe einer beschriebenen transportable Trennvorrichtung hergestellt werden.

Weitere Details und optionale Aspekte des Turms oder einer Turmsektion sind in Verbindung mit dem vorgeschlagenen Konzept oder einem oder mehreren der zuvor beschriebenen Ausführungsbeispiele (z. B. Fig. 1 bis 19) beschrieben.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden solange diese Kombinationen unter den durch die nachverfolgenden Patentansprüche definierten Schutzumfang der Erfindung fallen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Details anderen Fachleuten einleuchten werden. Deshalb ist beabsichtigt, dass die Erfindung lediglich durch den Schutzumfang der nachstehenden Patentansprüche und nicht durch die spezifischen Details, die anhand der Beschreibung und der Erläuterung der Ausführungsbeispiele hierin präsentiert wurden, beschränkt sei.

## Patentansprüche

1. Ein Verfahren (100) zum Trennen einer Schale zumindest einer Turmsektion eines Turms einer Windenergieanlage, das Verfahren umfassend:
Verbinden (110) einer Führungsstruktur mit der Schale einer Turmsektion eines Turms, wobei die Führungsstruktur einen Holm einer Leiter umfasst;
nach dem Verbinden der Führungsstruktur, Aufsetzen (120) einer transportablen Trennvorrichtung auf die Schale der Turmsektion, sodass eine Führungseinrichtung der transportablen Trennvorrichtung mit der Führungsstruktur gekoppelt wird, sodass sich ein Trenngerät der transportablen Trennvorrichtung während einer Bewegung entlang der Führungsstruktur entlang einer gewünschten Trennlinie bewegt; und
Trennen (130) der Schale der Turmsektion entlang der gewünschten Trennlinie während sich die Führungseinrichtung der transportablen Trennvorrichtung entlang der Führungsstruktur bewegt.

2. Das Verfahren gemäß Anspruch 1, wobei die Führungsstruktur zumindest ein permanent befestigtes Element aufweist, wobei das Verbinden (110) der Führungsstruktur mit der Schale ein permanentes Verbinden des permanent befestigten Elements mit der Schale umfasst.

3. Das Verfahren gemäß Anspruch 2, wobei das permanent befestigte Element an der Schale der Turmsektion durch Anschweißen permanent befestigt wird.

4. Das Verfahren gemäß Anspruch 2 oder 3, wobei das permanent befestigte Element der Holm der Leiter ist.

5. Das Verfahren gemäß Anspruch 2 oder 3, wobei das permanent befestigte Element eine Schweißbuchse einer Mehrzahl von Schweißbuchsen ist, die an der Schale der Turmsektion permanent befestigt werden.

6. Das Verfahren gemäß Anspruch 5, wobei der Holm der Leiter an der Mehrzahl von Schweißbuchsen befestigt ist, wobei die Führungseinrichtung der transportablen Trennvorrichtung beim Aufsetzen (120) mit dem Holm der Leiter gekoppelt wird.

7. Das Verfahren gemäß Anspruch 6, ferner umfassend:
Entfernen des Holms der Leiter nach dem Trennen der Schale der Turmsektion entlang der gewünschten Trennlinie; und
Rotieren der Turmsektion auf Rollen, die sich während des Rotierens der Turmsektion zwischen den Schweißbuchsen, an denen der Holm der Leiter während des Trennens befestigt war, hindurchbewegen.

8. Das Verfahren gemäß Anspruch 6 oder 7, ferner umfassend ein Befestigen einer Mehrzahl von Leitersprossen an dem Holm der Leiter nach dem Trennen der Schale der Turmsektion entlang der gewünschten Trennlinie.

9. Das Verfahren gemäß einem der Ansprüche 6 bis 8, wobei die gewünschte Trennlinie zwischen zwei Holmen der Leiter liegt.

10. Das Verfahren gemäß einem der vorhergehenden Ansprüche, ferner umfassend:
Verbinden einer weiteren Führungsstruktur mit der Schale der Turmsektion des Turms; und
Aufsetzen der transportablen Trennvorrichtung auf der Schale der Turmsektion, sodass die Führungseinrichtung der transportablen Trennvorrichtung mit der weiteren Führungsstruktur gekoppelt wird, sodass sich das Trenngerät während einer Bewegung entlang der weiteren Führungsstruktur entlang einer weiteren gewünschten Trennlinie bewegt; und
Trennen der Schale der Turmsektion entlang der weiteren gewünschten Trennlinie, während sich die Führungseinrichtung der transportablen Trennvorrichtung entlang der weiteren Führungsstruktur bewegt.

11. Eine transportable Sägevorrichtung (310, 1400, 1600) umfassend:
Ein Fahrwerk (1410) ausgelegt, um auf einer Turmsektion eines Turms für eine Windenergieanlage entlang zu fahren, wobei das Fahrwerk (1410) zumindest ein Rad aufweist, das ausgelegt ist, um während des Trennens der Schale (1402) der Turmsektion auf der Schale (1402) der Turmsektion zu rollen; und
Ein an dem Fahrwerk (1410) befestigtes Trenngerät (1420), das ausgelegt ist, um die Schale (1402) der Turmsektion des Turms für die Windenergieanlage entlang einer gewünschten Trennlinie durch Sägen zu trennen,
**dadurch gekennzeichnet, dass** das Fahrwerk (1410) eine Führungseinrichtung (1422) aufweist, die ausgelegt ist, um beim Aufsetzen der transportablen Sägevorrichtung auf die Turmsektion mit einer Führungsstruktur (1404) gekoppelt zu werden, sodass sich das Trenngerät (1420) während einer Bewegung entlang der Führungsstruktur (1404) entlang der gewünschten Trennlinie bewegt.

12. Eine transportable Sägevorrichtung (310, 1400, 1600) umfassend:
Ein Fahrwerk (1410) ausgelegt, um auf einer mit einer Schale (1402) einer Turmsektion eines Turms für eine Windenergieanlage verbundenen Führungsstruktur (1404) entlang zu fahren, wobei das Fahrwerk (1410) zumindest ein Rad aufweist, das ausgelegt ist, um während des Trennens der Schale (1402) der Turmsektion auf der Schale (1402) der Turmsektion zu rollen; und
Ein an dem Fahrwerk (1410) befestigtes Trenngerät (1420), das ausgelegt ist, um die Schale (1402) der Turmsektion des Turms für die Windenergieanlage entlang einer gewünschten Trennlinie durch Sägen zu trennen,
wobei das Fahrwerk (1410) eine Führungseinrichtung (1422) aufweist, die ausgelegt ist, um beim Aufsetzen der transportablen Sägevorrichtung auf die Turmsektion mit der Führungsstruktur (1404) gekoppelt zu werden, sodass sich das Trenngerät (1420) während einer Bewegung entlang der Führungsstruktur (1404) entlang der gewünschten Trennlinie bewegt.

13. Die transportable Sägevorrichtung gemäß Anspruch 11 oder 12, wobei das Fahrwerk (1410) als Führungseinrichtung zumindest ein Führungsrad (1522) aufweist, wobei das Führungsrad (1522) eine Lauffläche zum Rollen auf der Führungsstruktur (1404) und zumindest eine Radscheibe umfasst, wobei das Führungsrad (1522) im Bereich der Radscheibe einen größeren Durchmesser als im Bereich der Lauffläche aufweist.

14. Die transportable Sägevorrichtung gemäß einem der Ansprüche 11 bis 13, wobei das Fahrwerk (1410) zumindest ein Stützrad aufweist, das ausgelegt ist, um auf einer der gewünschten Trennlinie gegenüberliegenden Seite der Führungsstruktur (1404) während des Trennens der Schale (1402) der Turmsektion auf der Schale (1402) der Turmsektion zu rollen.

15. Die transportable Sägevorrichtung gemäß einem der Ansprüche 11 bis 14, wobei die transportable Sägevorrichtung ausgebildet ist, sodass sich die gesamte transportable Sägevorrichtung während des Trennens der Schale (1402) der Turmsektion entlang der gewünschten Trennlinie relativ zur Schale (1402) der Turmsektion bewegt.

## Claims

1. A method (100) for separating a shell of at least one tower section of a tower of a wind turbine, the method comprising:
connecting (110) a guide structure to the shell of a tower section of a tower, the guide structure comprising a stile of a ladder;
after connecting the guide structure, placing (120) a transportable separating apparatus on the shell of the tower section, so that a guiding feature of the transportable separating apparatus is coupled to the guide structure, so that a separating device of the transportable separating apparatus moves along a desired separating line during a movement along the guide structure; and
separating (130) the shell of the tower section along the desired separating line while the guiding feature of the transportable separating apparatus moves along the guide structure.

2. The method of claim 1, wherein the guide structure comprises at least one permanently fixed element, wherein connecting (110) the guide structure to the shell comprises permanently connecting the permanently fixed element to the shell.

3. The method of claim 2, wherein the permanently fixed element is permanently fixed to the shell of the tower section by welding.

4. The method of claim 2 or 3, wherein the permanently fixed element is the stile of the ladder.

5. The method of claim 2 or 3, wherein the permanently fixed element is a weld bushing of a plurality of weld bushings permanently fixed to the shell of the tower section.

6. The method of claim 5, wherein the stile of the ladder is fixed to the plurality of weld bushings, wherein the guiding feature of the transportable separating apparatus is coupled to the stile of the ladder during placement (120).

7. The method of claim 6, further comprising:
removing the stile of the ladder after separating the shell of the tower section along the desired separating line; and
rotating the tower section on rollers which move through between the welding bushes to which the stile of the ladder was fixed during separation while the tower section is rotating.

8. The method of claim 6 or 7, further comprising fixing a plurality of ladder rungs to the stile of the ladder after separation of the shell of the tower section along the desired separating line.

9. The method of any of claims 6 to 8, wherein the desired separating line is between two stiles of the ladder.

10. The method of any of the preceding claims, further comprising:
connecting a further guide structure to the shell of the tower section of the tower; and
placing the transportable separating apparatus on the shell of the tower section so that the guiding feature of the transportable separating apparatus is coupled to the further guide structure so that the separating device moves along a further desired separating line during a movement along the further guide structure; and
separating the shell of the tower section along the further desired separating line while the guiding feature of the transportable separating apparatus moves along the further guide structure.

11. A transportable sawing apparatus (310, 1400, 1600), comprising:
a rolling chassis (1410) configured to drive along a tower section of a tower for a wind turbine, the rolling chassis (1410) having at least one wheel configured to roll on the shell (1402) of the tower section during separation of the shell (1402) of the tower section; and
a separating device (1420) fixed to the rolling chassis (1410) which is configured to separate the shell (1402) of the tower section of the tower for the wind turbine along a desired separating line by sawing,
**characterized in that** the rolling chassis (1410) has a guiding feature (1422) configured to be coupled to a guide structure (1404) during placement of the transportable sawing apparatus on the tower section so that the separating device (1420) moves along the desired separating line during a movement along the guide structure (1404).

12. A transportable sawing apparatus (310, 1400, 1600), comprising:
a rolling chassis (1410) configured to drive along a guide structure (1404) connected to a shell (1402) of a tower section of a tower for a wind turbine, the rolling chassis (1410) having at least one wheel configured to roll on the shell (1402) of the tower section during separation of the shell (1402) of the tower section; and
a separating device (1420) fixed to the rolling chassis (1410) which is configured to separate the shell (1402) of the tower section of the tower for the wind turbine along a desired separating line by sawing,
wherein the rolling chassis (1410) has a guiding feature (1422) configured to be coupled to the guide structure (1404) during placement of the transportable sawing apparatus on the tower section so that the separating device (1420) moves along the desired separating line during a movement along the guide structure (1404).

13. The transportable sawing apparatus of claim 11 or 12, wherein the rolling chassis (1410) has at least one guiding wheel (1522) as a guiding feature, the guiding wheel (1522) comprising a running tread for rolling on the guide structure (1404) and at least one wheel disk, the guiding wheel (1522) having a larger diameter in the area of the wheel disk than in the area of the running tread.

14. The transportable sawing apparatus of any of claims 11 to 13, the rolling chassis (1410) having at least one support wheel configured to roll on the shell (1402) of the tower section on a side of the guide structure (1404) opposite to the desired separating line during separation of the shell (1402) of the tower section.

15. The transportable sawing apparatus of any of claims 11 to 14, wherein the transportable sawing apparatus is configured such that the entire transportable sawing apparatus moves along the desired separating line relative to the shell (1402) of the tower section during separation of the shell (1402) of the tower section.

## Revendications

1. Procédé (100) pour séparer une coque d'au moins une section de tour d'une tour d'une éolienne, le procédé comprenant :
connecter (110) une structure de guidage à la coque d'une section de tour d'une tour, la structure de guidage comprenant un montant d'une échelle ;
après la connexion de la structure de guidage, placer (120) un appareil de séparation transportable sur la coque de la section de tour de sorte qu'un moyen de guidage de l'appareil de séparation transportable est couplé à la structure de guidage de sorte qu'un dispositif de séparation de l'appareil de séparation transportable se déplace le long d'une ligne de séparation souhaitée pendant un mouvement le long de la structure de guidage ; et
séparer (130) la coque de la section de tour le long de la ligne de séparation souhaitée tandis que le moyen de guidage de l'appareil de séparation transportable se déplace le long de la structure de guidage.

2. Procédé selon la revendication 1, la structure de guidage présentant au moins un élément fixé de manière permanente, la connexion (110) de la structure de guidage à la coque comprenant une connexion permanente de l'élément fixé de manière permanente à la coque.

3. Procédé selon la revendication 2, l'élément fixé de manière permanente étant fixé de manière permanente à la coque de la section de tour par soudage.

4. Procédé selon la revendication 2 ou 3, l'élément fixé de manière permanente étant le montant de l'échelle.

5. Procédé selon la revendication 2 ou 3, l'élément fixé de manière permanente étant une douille de soudage d'une pluralité de douilles de soudage qui sont fixées de manière permanente à la coque de la section de tour.

6. Procédé selon la revendication 5, le montant de l'échelle étant fixé à la pluralité de douilles de soudage, le moyen de guidage de l'appareil de séparation transportable étant couplé au montant de l'échelle lors du placement (120).

7. Procédé selon la revendication 6, comprenant en outre :
enlever le montant de l'échelle après la séparation de la coque de la section de tour le long de la ligne de séparation souhaitée ; et
tourner la section de tour sur des rouleaux qui se déplacent, pendant la rotation de la section de tour, entre les douilles de soudage auxquelles le montant de l'échelle était fixé pendant la séparation.

8. Procédé selon la revendication 6 ou 7, comprenant en outre une fixation d'une pluralité d'échelons d'échelle au montant de l'échelle après la séparation de la coque de la section de tour le long de la ligne de séparation souhaitée.

9. Procédé selon l'une des revendications 6 à 8, la ligne de séparation souhaitée étant située entre deux montants de l'échelle.

10. Procédé selon l'une des revendications précédentes, comprenant en outre :
connecter une autre structure de guidage à la coque de la section de tour de la tour ; et
placer l'appareil de séparation transportable sur la coque de la section de tour de sorte que le moyen de guidage de l'appareil de séparation transportable est couplé à l'autre structure de guidage de sorte que le dispositif de séparation se déplace le long d'une autre ligne de séparation souhaitée pendant un mouvement le long de l'autre structure de guidage ; et
séparer la coque de la section de tour le long de l'autre ligne de séparation souhaitée tandis que le moyen de guidage de l'appareil de séparation transportable se déplace le long de l'autre structure de guidage.

11. Appareil de sciage transportable (310, 1400, 1600) comprenant :
châssis (1410) configuré pour se déplacer le long d'une section de tour d'une tour pour une éolienne, le châssis (1410) présentant au moins une roue configurée pour rouler sur la coque (1402) de la section de tour pendant la séparation de la coque (1402) de la section de tour; et
un dispositif de séparation (1420) fixé au châssis (1410) qui est configuré pour séparer la coque (1402) de la section de tour de la tour pour l'éolienne le long d'une ligne de séparation souhaitée par sciage,
**caractérisé en ce que** le châssis (1410) présente un moyen de guidage (1422) configuré pour être couplé à une structure de guidage (1404) pendant le placement de l'appareil de sciage transportable sur la section de tour de sorte que le dispositif de séparation (1420) se déplace le long de la ligne de séparation souhaitée pendant un mouvement le long de la structure de guidage (1404).

12. Appareil de sciage transportable (310, 1400, 1600) comprenant :
un châssis (1410) configuré pour se déplacer le long d'une structure de guidage (1404) connectée à une coque (1402) d'une section de tour d'une tour pour une éolienne, le châssis (1410) présentant au moins une roue configurée pour rouler sur la coque (1402) de la section de tour pendant la séparation de la coque (1402) de la section de tour ; et
un dispositif de séparation (1420) fixé au châssis (1410) qui est configuré pour séparer la coque (1402) de la section de tour de la tour pour l'éolienne le long d'une ligne de séparation souhaitée par sciage,
le châssis (1410) présentant un moyen de guidage (1422) configuré pour être couplé à la structure de guidage (1404) pendant le placement de l'appareil de sciage transportable sur la section de tour de sorte que le dispositif de séparation (1420) se déplace le long de la ligne de séparation souhaitée pendant un mouvement le long de la structure de guidage (1404).

13. Appareil de sciage transportable selon la revendication 11 ou 12, le châssis (1410) présentant au moins une roue de guidage (1522) comme moyen de guidage, la roue de guidage (1522) comprenant une bande de roulement pour rouler sur la structure de guidage (1404) et au moins un disque de roue, la roue de guidage (1522) présentant un diamètre plus grand dans la région du disque de roue que dans la région de la bande de roulement.

14. Appareil de sciage transportable selon l'une des revendications 11 à 13, le châssis (1410) présentant au moins une roue de support configurée pour rouler sur la coque (1402) de la section de tour sur un côté de la structure de guidage (1404) opposé à la ligne de séparation souhaitée lors de la séparation de la coque (1402) de la section de tour.

15. Appareil de sciage transportable selon l'une des revendications 11 à 14, l'appareil de sciage transportable étant configuré de sorte que l'ensemble de l'appareil de sciage transportable se déplace par rapport à la coque (1402) de la section de tour le long de la ligne de séparation souhaitée pendant la séparation de la coque (1402) de la section de tour.
